Europäisches Patentamt

European Patent Office

Office européen des brevets

(11) Publication number: **0 113 456**
**B1**

# (12) EUROPEAN PATENT SPECIFICATION

(45) Date of publication of patent specification: **29.04.87**

(21) Application number: **83112527.3**

(22) Date of filing: **13.12.83**

(51) Int. Cl.⁴: **G 11 B 5/86**

(54) Process and apparatus for thermoremanent duplication of magnetic tapes.

(30) Priority: **13.12.82 US 449277**

(43) Date of publication of application:
**18.07.84 Bulletin 84/29**

(45) Publication of the grant of the patent:
**29.04.87 Bulletin 87/18**

(84) Designated Contracting States:
**BE DE FR GB IT LU NL SE**

(56) References cited:
**DE-A-2 408 744**
**DE-A-2 446 596**
**DE-A-3 150 403**
**US-A-3 761 645**
**US-A-3 824 617**

(73) Proprietor: **E.I. DU PONT DE NEMOURS AND COMPANY**
**1007 Market Street**
**Wilmington Delaware 19898 (US)**

(72) Inventor: **Chouinard, Michael Patrick**
**202 Cain Rue**
**Newark Delaware 19711 (US)**
Inventor: **Bancroft, Lewis Clinton**
**12 Red Oak Road**
**Wilmington Delaware 19806 (US)**

(74) Representative: **Abitz, Walter, Dr.-Ing. et al**
**Abitz, Morf, Gritschneder, Freiherr von Wittgenstein Postfach 86 01 09**
**D-8000 München 86 (DE)**

EP 0 113 456 B1

Courier Press, Leamington Spa, England.

## Description

The invention relates to an improved method for the thermoremanent duplication of magnetic tapes using radiant heating and contact cooling with applied pressure, controlled tension, and precision tape guidance.

Currently, the videotape industry duplicates videotapes at substantial expense by using many copiers to electronically reproduce from a master tape at normal slow playback speed. The master tape is run in real time while up to 1000 copiers in one room record the information. A need exists for a reproduction method which is faster and less costly.

Magnetic tapes have been previously reproduced by anhysteretic contact printing in which the master tape and the copy are placed in face to face contact and exposed to a decaying a. c. magnetic field (US—A—2 738 383). Reproduction by this means, however, requires high coercivity master tapes and transfers signals weaker than those present in the master.

Also previously proposed has been a method of duplication involving thermoremanent transfer wherein the blank copy magnetic tape is heated above its Curie point and thereafter cooled in intimate contact with the prerecorded master tape whereby the signals of the master are transferred to the copy tape. (US—B—28 290; US—A—3 612 103; US—A—3 699 267; US—A—3 541 577; US—A—3 465 105, US—A—3 824 617.)

Thermoremanent reproduction has the advantage that the copied magnetic recording may have an even greater intensity of signal than that of the original. However disadvantages in previous thermal remanent copying systems have included (1) overheating of the base film resulting in physical distortions which produce electronic timing errors during playback and (2) high frequency roll-off, that is the loss in transfer of high frequencies, due to the inadequate contact pressure between master and copy.

One attempt to control overheating of the base film and prevent high frequency roll-off has been using a finely focussed laser beam to provide rapid localized heating of the copy tape magnetizable particles to a temperature above their Curie point. The laser spot size is approximately 5 μm commensurate with the magnetic particle size. A scanning laser beam to cover the entire tape width is required (Stanel U.S.P. 3,761,645).

The invention as claimed in claim 1 solves the problem of how to carry out a thermoremanent transfer duplication method without overheating of the prerecorded master tape, without loss in transfer of high frequencies and without the need of scanning the energy beam.

An apparatus for carrying out this method is also subject matter of the invention.

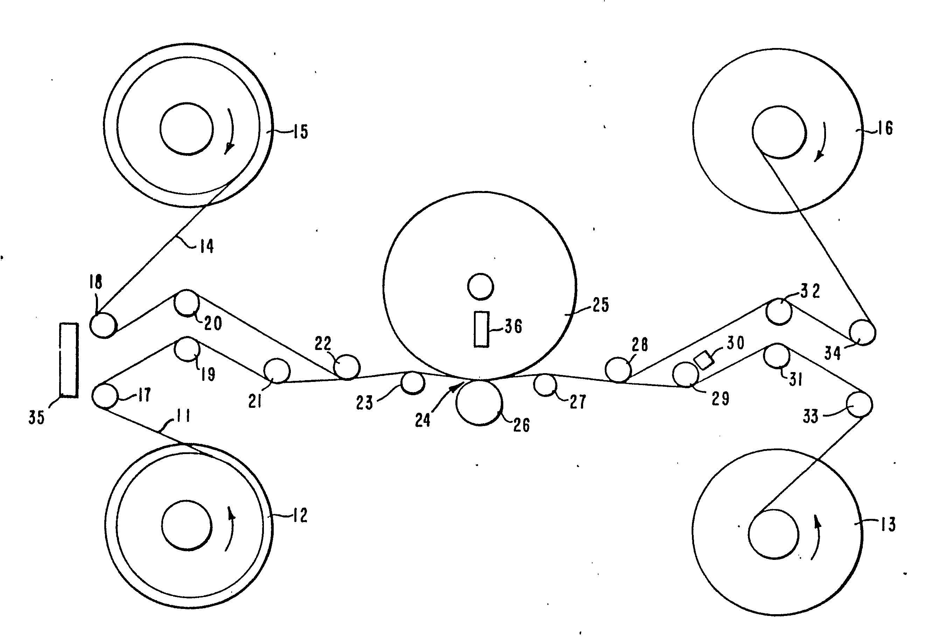

The Figure is a stylized representation of an apparatus for duplicating prerecorded master magnetic tape.

In accordance with the present invention chromium dioxide particles of a recording member, contact a prerecorded magnetizable medium in a nip of two rolls. The recording member is also referred to herein as a copy tape while the prerecorded magnetizable medium is also referred to as a master tape. Heating of the chromium dioxide particles to at least the Curie temperature takes place, i.e., the temperature where the magnetic particles lose their magnetization. Thereafter cooling of the chromium dioxide particles occurs in the nip of the two rolls while in contact with the master tape to orient the magnetic domains of the chromium dioxide material to the magnetization pattern of recorded information on the master tape. In the present invention both the heating and cooling steps take place while the recording member containing chromium dioxide particles and the prerecorded master are in contact in a nip of two rolls. Heating of the chromium dioxide particles to the Curie temperature prior to entry into the nip does not take place.

The chromium dioxide particles are embedded in a polymer matrix, typically a polyurethane elastomer and this coating is supported on a flexible material which is transparent to a beam of energy used for heating. In the present context the material allows at least a significant quantity of the energy beam to pass without being absorbed to allow heating of the chromium dioxide particles and minimize the heating of the flexible material. The energy source which is used to heat the chromium dioxide coating is dependent on the flexible material used to support the particles. Suitable heating sources include incandescent and electrical discharge lamps, with laser heating preferred. Suitable support materials include polyester, polyolefin, cellulose and other traditional photographic and magnetic support media.

Since heating of the chromium dioxide particles takes place while in the nip of two rolls, the energy beam by necessity must pass through the roll supporting the recording member. The source of the beam of energy can be placed inside this roll but more preferably is outside the roll and the beam is controlled by an optical system. The material of this roll must likewise be transparent to the beam of energy in addition to the support for the chromium dioxide particles. The heating source, preferably a laser, emits a continuous beam of energy which simultaneously heats the chromium dioxide particles across a width of the recording member on which the magnetic pattern is to be replicated. "Simultaneously" in the present context excludes traversal, such as a scanning pattern, of the energy beam across the recording member. The width of the recording member which is to receive the magnetic pattern is heated simultaneously without deflection of the energy pattern in a scanning mode.

It is necessary in the present invention that one of the two rolls is compressible, i.e., it provides "a footprint" to extend nip contact between the rolls sufficient to keep the recording member and prerecorded magnetizable medium in a pressure contact during the heating and cooling steps.

The heating duration of the chromium dioxide particles will be in the range of .01 to 5 milliseconds and generally 0.1 to 0.4 milliseconds. Criticality is present in the need to maintain intimate pressure contact of the tapes during the heating and cooling steps.

The cooling period of the chromium dioxide particles while in the nip and in contact with the prerecorded medium is in the range of 0.1 to 100 milliseconds and generally 0.5 to 4 milliseconds. The duration of the time in the nip is dependent not only on the size and compressibility of one or more rolls, but also on the speed the tapes run through the nip. Typical tape speeds are 0.6 m (25 inches) per second to 2.5 m (100 inches) per second. One of the rolls forming the nip should be compressible.

The pressure on the tapes in the nip generally will be at least 35 kPa (5 psi) and conventionally will be in the range of 100 to 3500 kPa (15 to 500 psi) and more generally 350 to 1750 kPa (50 to 250 psi). The heating and cooling steps which are both carried out in the nip have an advantage that elongation of a tape due to tension is minimized particularly due to softening of a polymeric support material to elevated temperature. Also one or both rolls can be cooled. Additionally adjustment of the rolls allows the pressure in the nip to be varied irrespective of the thickness of the two tapes.

Referring to the Figure, the apparatus includes a master tape 11, a master feed reel 12, a master take-up reel 13, a copy tape 14, a copy feed reel 15, and a copy take-up reel 16. Conventional tape drive devices may be employed for driving reels 12, 13, 15 and 16 in the direction of movement as shown by arrows. Tape 11 fed from reel 12 and tape 14 fed from reel 15 are guided around idler rolls 17 and 18 respectively, past detector assembly 35, over tensionmeters 19 and 20 respectively. Tape 11 passes under idler roll 21, and both tapes are brought together under guide roll 22, with magnetic surfaces in face to face contact. Tapes 11 and 14 travel together over cooled reference roll 23 through magnetic transfer assembly, generally designated as 24, where thermoremanent transfer of the information from the tape 11 to tape 14 occurs.

The magnetic transfer assembly includes a print wheel 25 and a nip roll 26.

Print wheel 25 is a cooled hollow transparent roll of 20 cm (8 inch) diameter. Cooling is both internal and external by dry chilled air of around 50°F (10°C). The print wheel 25 can be made of polymethyl methacrylate with an internal antireflective coating. The print wheel 25 is hollow and transparent in order to pass a beam of energy 36, preferably laser light, to the outside of the wheel surface.

Nip roll 26 is a cooled, coated roll of 2 inch diameter. Cooling is both internal and external by dry, chilled air of around 50°F (10°C). Roll 26 can be coated with an elastomeric coating, such as 0.055 inch (1.140 cm) Adiprene® polyurethane rubber.

The area of contact of the print wheel 25 with nip roll 26 or footprint area is 0.10″ (0.254 cm). Pressure maintained in the nip roll assembly generally exceeds 700 kPa (100 psi).

Tapes 11 and 14 exit the magnetic transfer assembly 24 passing over cooled reference roll 27, under guide roll 28, and are separated as tapes 11 and 14 continue over tensiometers 31 and 32, respectively, around idler rolls 33 and 34, respectively to master take-up reel 13 and copy take-up reel 16 respectively.

Reference rolls 23 and 27 on either side of magnetic transfer assembly 24 can have reference edges to provide edge guidance to the master and copy tapes so that they will track together for duplication.

Magnetic pick-up head 30 is a means for determining and controlling optimum machine speed at a given energy flux level for preferred signal transfer. Signals derived from the pick-up head allow for adjustment in either machine speed or energy flux level.

Detector assembly 35 is a means for determining the presence of tapes 11 and 14. Information derived from this assembly protects the nip roll 26 from damage due to the beam of energy. The beam is turned off when no tape is detected.

The preferred laser beam for this invention is a neodymium-doped yttrium-aluminum-garnet (YAG) emitting light of a single wavelength of 1.06 μm. The polyester base film is transparent to this laser wavelength and a temperature profile is established which is low throughout the support film width but high at the film-particle interface. In this manner the copy film base emits the heating-transfer zone only 25° to 60°C higher than it entered, below the glass transition temperature of the polymer above which tape distortion could occur.

The Nd—Yag rod emits a 0.6 cm (1/4″) diameter beam which is then expanded through an up-collimator, shaped into a rectangular pattern, redirected by two prisms and focused by a cylindrical lens to a line 12 mm×0.25 mm (1/2″×.010″) which shines through the transparent print wheel surface onto the copy tape 14 and spans the tape width providing uniform power density distribution across the tape width.

Master magnetic tape 11 consists preferably of a support of polyethylene terephthalate and a magnetizable layer of higher Curie point than the copy magnetizable layer such as iron alloy particles, cobalt-modified iron oxide particles or $CrO_2$ particles with elevated Curie temperatures.

The copy magnetic tape 14 consists preferably of a support of polyethylene terephthalate and a magnetic layer containing about 50% by volume of $CrO_2$ with Curie temperature of about 130°C.

The master tape 11 may include information ranging in wavelength from .03 inches to $20 \times 10^{-6}$ inches ($0.076$ cm to $50.8 \times 10^{-6}$ cm).

Example

The apparatus described in the Figure was used to copy a helical scan video pattern on 1/2 inch (1.27 cm) tape from a metal particle mirror master to an unrecorded chromium dioxide copy tape. Heating was by an infrared laser beam projecting through the transparent roll and focusing into a narrow line across the

3

tape. The copy tape was cooled in exact register with the master tape while constrained in the "footprint" of the nip and guided against the synchronization edge as a mechanical reference.

The color video program was successfully reproduced with good color, definition, and tracking. Essentially no dimensional change in the polyester support of the copy tape was experienced.

System parameters were as follows:

Master tape
> Iron alloy metallic particles in a polymeric binder
> Pre-recorded in a mirror master pattern, VHS format
> Width 0.500″ (1.27 cm)
> Thickness 0.00088″ (0.0022 cm)
> Coating thickness 0.000210″ (0.0005 cm)
> DC coercivity 1870 Oersteds
> Retentivity 2300 gauss

Copy tape
> $CrO_2$ particles in a polymeric binder
> Standard type VHS T-120 video tape from PD Magnetics Inc.
> Width 0.500″ (1.27 cm)
> Thickness 0.00073″ (0.0019 cm)
> Coating thickness 0.00012″ (0.0003 cm)
> DC coercivity 550 Oersteds
> Retentivity 1400 gauss

Nip Rolls
Transparent Roll
> Composition—polymethyl methacrylate resin
> Diameter 20 cm (8″)
> Cooled by a flow of dry air at 18°C

Elastomeric roll
> Composition—Aluminum coated with 1.14 cm (0.055″) Adiprene® polyurethane rubber
> Elastomer durometer 80
> Nip footprint length at 9.3 N (21 lb) force: 0.1 inch (0.254 cm)

Laser
> Neodymium: Yttrium-Aluminum Garnet, continuous output
> Wavelength 1.06 µm
> Power 74 watts output
> Power to tape 30 W

Optics
> Line focused at interface of copy tape coating and polyester support; width .01″ (0.0254 cm)

Tape guidance
> Each tape guided from edge nearest synchronization track
> Feed and takeup tensions about 0.3 N (30) grams

Tape speed
> 25 in/sec (63.5 cm/sec)

Heating time
> 400 microseconds (0.025 cm at 62.5 cm/s) (0.01″ at 25 IPS))

Cooling time in nip
> About 2 milliseconds (1/2 of nip length 0.25 cm at 62.5 cm/s (0.1″ at 25 IPS))
> Nip pressure 2940 kPa (420 psi)

**Claims**

1. A process for replicating a magnetic pattern on a moving flexible magnetizable recording member (14) containing a particulate layer with chromium dioxide particles on a flexible support which comprises
(a) passing the magnetizable recording member (14) and a flexible prerecorded magnetizable medium (11) into pressure contact with one another, with the chromium dioxide particles facing said prerecorded magnetizable medium (11) and the prerecorded magnetizable medium having a higher Curie temperature than the layer with chromium dioxide particles of the magnetizable recording member (14);

4

(b) heating simultaneously the chromium dioxide particles across the width of the recording member (14) on which a magnetic pattern is to be replicated for a time period in the range of from 0.01 to 5 milliseconds while in contact with the prerecorded magnetizable medium (11), said chromium dioxide particles being heated to above the Curie temperature;

(c) cooling the chromium dioxide particles to below their Curie temperature while in intimate contact with the prerecorded medium for a time period in the range from 0.1 to 100 milliseconds, characterized by
the heating of the chromium dioxide particles above their Curie temperature being effected by passing a stationary line beam of continuous energy through the flexible support of the magnetizable recording member (14),
the flexible support being transparent to the beam of energy.

2. The process of claim 1 wherein the chromium dioxide particles are heated for 0.1 to 0.4 milliseconds.

3. The process of claim 1 wherein the chromium dioxide particles are cooled for 0.5 to 4 milliseconds.

4. The process of claim 1 wherein the recording member (14) and the prerecorded magnetizable medium (11) each moves at the same speed in the range of 0.6 to 2.5 m/s.

5. The process of claim 1 wherein the contact pressure between the recording member (14) and the prerecorded magnetizable medium (11) is at least 35 kPa.

6. The process of claim 5 wherein the contact pressure is in the range of from 100 to 3500 kPa.

7. The process of claim 6 where the pressure is in the range of from 350 to 1750 kPa.

8. The process of claim 1 wherein the stationary line beam spans the width of the recording member (14).

9. The process of claims 1 or 7 wherein the beam of energy is a laser (36).

10. An apparatus for carrying out the process of claims 1 to 9 comprising
(a) supply and takeup means (15, 16) for the flexible magnetizable recording member (14);
(b) supply and takeup means (12, 13) for the flexible prerecorded magnetizable medium (11);
(c) opposite facing rolls (25, 26) to allow contact of the recording member (14) and the magnetizable medium (11) in a nip of the two rolls;
(d) heating means to heat the chromium dioxide particles of the recording member (14) to above their Curie temperature;
characterized in that
the heating means generate a stationary line beam of continuous energy which is directed without scanning through at least a portion of one (25) of the rolls, being transparent to the beam of energy, and that at least one (26) of the rolls is compressible.

11. The apparatus of claim 10 wherein the line beam is aligned parallel to the axis of the roll (25) which is transparent to the energy beam and spans the width of the recording member (15) with substantially uniform power density.

12. The apparatus of claims 10 or 11 wherein the heating means is a laser.


**Patentansprüche**

1. Verfahren zum Kopieren eines magnetischen Musters auf ein sich bewegendes, flexibles, magnetisierbares Aufzeichnungselement (14), das eine Teilchenschicht mit Chromdioxidteilchen auf einem flexiblen Träger enthält, bei dem
a) des magnetisierbare Aufzeichnungselement (14) und ein flexibles, zuvor mit der Aufzeichnung versehenes magnetisierbares Medium (11) in Druckkontakt miteinander weitergeleitet werden, wobei die Chromdioxidteilchen dem zuvor mit der Aufzeichnung versehenen magnetisierbaren Medium (11) zugewandt sind und das zuvor mit der Aufzeichnung versehene magnetisierbare Medium eine höhere Curie-Temperatur als die Schicht der Chromdioxidteilchen des magnetisierbaren Aufzeichnungselements (14) hat;
b) die Chromdioxidteilchen über die Breite des Aufzeichnungselements (14), auf das ein magnetisches Muster kopiert werden soll, für eine Zeitdauer im Bereich von 0,01 bis 5 msec gleichzeitig erwärmt werden, während sie sich in Kontakt mit dem zuvor mit der Aufzeichnung versehenen magnetisierbaren Medium (11) befinden, wobei die Chromdioxidteilchen auf über die Curie-Temperatur erwärmt werden;
c) die Chromdioxidteilchen unter ihre Curie-Temperatur abgekühlt werden, während sie sich für eine Zeitdauer im Bereich von 0,1 bis 100 msec in engem Kontakt mit dem zuvor mit der Aufzeichnung versehenen Medium befinden,
dadurch gekennzeichnet, daß
die Erwärmung der Chromdioxidteilchen über ihre Curie-Temperatur dadurch bewirkt wird, daß ein stationärer, linienförmiger Strahl kontinuierlicher Energie durch den flexiblen Träger des magnetisierbaren Aufzeichnungselements (14) gerichtet wird, wobei der flexible Träger für den Energiestrahl durchlässig ist.

2. Verfahren nach Anspruch 1, wobei die Chromdioxidteilchen für 0,1 bis 0,4 msec erwärmt werden.

3. Verfahren nach Anspruch 1, wobei die Chromdioxidteilchen für 0,5 bis 4 msec abgekühlt werden.

4. Verfahren nach Anspruch 1, wobei das Auszeichnungselement (14) und das zuvor mit der Aufzeichnung versehene magnetisierbare Medium (11) sich jeweils mit der gleichen Geschwindigkeit im Bereich von 0,6 bis 2,5 m/sec bewegen.

5. Verfahren nach Anspruch 1, wobei der Kontaktdruck zwischen dem Aufzeichnungselement (14) und dem zuvor mit der Aufzeichnung versehenen magnetisierbaren Medium (11) wenigstens 35 kPa liegt.

6. Verfahren nach Anspruch 5, wobei der Kontaktdruck im Bereich von 100 bis 3500 kPa liegt.

7. Verfahren nach Anspruch 6, wobei der Druck im Bereich von 350 bis 1750 kPa liegt.

8. Verfahren nach Anspruch 1, wobei der stationäre linienförmige Strahl die Breite des Aufzeichnungselements (14) überspannt.

9. Verfahren nach Anspruch 1 bis 7, wobei der Energiestrahl ein Laser (36) ist.

10. Vorrichtung zur Durchführung des Verfahrens nach den Ansprüchen 1 bis 9, mit

(a) Zufuhr- und Aufnahmeeinrichtungen (15, 16) für das flexible, magnetisierbare Aufzeichnungselement (14),

(b) Zufuhr- und Aufnahmeeinrichtungen (12, 13) für das flexible, zuvor mit der Aufnahme versehene magnetisierbare Medium (11);

(c) gegenüberliegende Walzen (25, 26), die einen Kontakt des Aufzeichnungselement (14) und des magnetisierbaren Mediums (11) in einem Spalt der beiden Walzen ermöglichen;

(d) Erwärmungseinrichtungen, um die Chromdioxidteilchen des Aufzeichnungselements (14) auf oberhalb ihre Curie-Temperatur zu erwärmen;
dadurch gekennzeichnet, daß

die Erwärmungseinrichtung einen stationären linienförmigen Strahl kontinuierlicher Energie erzeugt, der ohne Abtastung durch wenigstens einen Teil einer (25) der Walzen gerichtet wird, die durchlässig für den Energiestrahl ist und

daß wenigstens eine (26) der Walzen zusammendrückbar ist.

11. Vorrichtung nach Anspruch 10, wobei der linienförmige Strahl parallel zu der Achse der Walze (25) ausgerichtet ist, die durchlässig für den Energiestrahl ist, und die Breite des Aufzeichnungselements (15) mit im wesentlichen gleichförmiger Energiedichte überspannt.

12. Vorrichtung nach Anspruch 10 oder 11, wobei die Erwärmungseinrichtung ein Laser ist.

**Revendications**

1. Procédé pour contretyper une configuration magnétique sur un élément d'enregistrement magnétisable flexible en mouvement (14) contenant une couche de particules comprenant des particules de dioxyde de chrome sur un support flexible, ce procédé comportant les étapes suivantes:

(a) faire passer l'élément d'enregistrement magnétisable (14) et un objet magnétisable ayant reçu un enregistrement préalable flexible (11) en contact sous pression l'un contre l'autre, les particules de dioxyde de chrome étant tournées vers le milieu magnétisable préenregistré (11) et le milieu magnétisable préenregistré ayant une température de Curie plus élevée que la couche à particules de dioxyde de chrome de l'élément d'enregistrement magnétisable (14);

(b) chauffer simultanément les particles de dioxyde de chrome sur la largeur de l'élément d'enregistrement (14) sur lequel il s'agit de contretyper une configuration magnétisable, pendant un temps de la gamme de 0,01 à 5 ms alors qu'il est en contact avec l'objet magnétisable ayant reçu un enregistrement préalable (11), les particules de dioxyde de chrome étant chauffées au-dessus de la température de Curie;

(c) refroidir les particules de dioxyde de chrome en dessous de leur température de Curie pendant qu'elles sont en contact intime avec l'objet ayant reçu l'enregistrement préalable pendant un temps de la gamme de 0,1 à 100 ms,

caractérisé en ce que l'on effectue le chauffage des particules de dioxyde de chrome au-dessus de leur température de Curie en faisant passer un faisceau linéaire stationnaire d'énergie continue à travers le support flexible de l'élément d'enregistrement magnétisable (14), ce support flexible étant transparent au faisceau d'énergie.

2. Procédé selon la revendication 1, dans lequel on chauffe les particules de dioxyde de chrome pendant 0,1 à 0,4 ms.

3. Procédé selon la revendication 1, dans lequel on refroidit les particles de dioxyde de chrome pendant 0,5 à 4 ms.

4. Procédé selon la revendication 1, dans lequel l'élément d'enregistrement (14) et l'objet magnétisable ayant reçu un enregistrement préalable (11) se meuvent à la même vitesse dans la gamme de 0,6 à 2,5 m/s.

5. Procédé selon la revendication 1, dans lequel la pression de contact entre l'élément d'enregistrement (14) et l'objet magnétisable ayant reçu un enregistrement préalable (11) est d'au moins 35 kPa.

6. Procédé selon la revendication 5, dans lequel la pression de contact est de la gamme de 100 à 3500 kPa.

7. Procédé selon la revendication 6, où la pression est de la gamme de 350 à 1750 kPa.

8. Procédé selon la revendication 1, dans lequel le faisceau linéaire stationaire couvre la largeur de l'élément d'enregistrement (14).

9. Procédé selon l'une des revendication 1 et 7, dans lequel le faisceau d'énergie est un faisceau laser (36).

10. Appareil pour la mise en oeuvre du procédé selon les revendications 1 à 9, comprenant

(a) des moyens d'amenée et d'enroulement (15, 16) pour l'élément d'enregistrement magnétisable flexible (14);

(b) des moyens d'amenée et d'enroulement (12, 13) pour l'objet magnétisable ayant reçu un enregistrement préalable, et flexible (11);

(c) des rouleaux opposés face à face (25, 26) pour permettre le contact de l'élément d'enregistrement (14) et de l'objet magnétisable (11) dans une fente de pincement des deux rouleaux;

(d) des moyens de chauffage pour chauffer les particules de dioxyde de chrome de l'élément d'enregistrement (14) au-dessus de leur température de Curie;

caractérisé par le fait que les moyens de chauffage engendrent un faisceau linéaire stationnaire d'énergie continue qui est dirigé sans balayage à travers au moins une partie de l'un (25) des rouleaux qui est transparente au faisceau d'énergie, et qu'au moins un (26) des rouleaux est compressible.

11. Appareil selon la revendication 10, dans lequel le faisceau linéaire est aligné parallèlement à l'axe du rouleau (25) qui est transparent au faisceau d'énergie et franchit la largeur de l'élément d'enregistrement (15) avec une densité de puissance pratiquement uniforme.

12. Appareil selon l'une des revendications 10 et 11, dans lequel le moyen de chauffage est un laser.

7